# EUROPEAN PATENT APPLICATION

(11) **EP 4 811 204 A1**
(43) Date of publication of application: **23.09.2026**
(21) Application number: 25164230.2
(22) Date of filing: 17.03.2025
(51) Int. Cl.: G06F 40/103, G10L 13/10

(54) **BEAT-SCULPTING : A SPEECH-TO-PROSE METHOD FOR STRUCTURED PROSE TRANSFORMATION**

(71) Applicant: Nguyen, Sylvain, 11130 Sigean (FR)
(72) Inventor: Nguyen, Sylvain, 11130 Sigean (FR)

(57) **Abstract**

The present invention, Beat-Sculpting^{™}, introduces a method for **structured prose transformation based on speech-derived rhythmic features.** Unlike traditional speech-to-text systems that focus only on transcription, this method analyzes vocal cadence, pauses, and tonal shifts to dynamically reshape text structure, focusing instead on impact and reader immersion. By applying a transformation pattern that maps spoken rhythm onto text, the system enhances narrative pacing, dramatic weight, and storytelling clarity. The method can be used in AI-powered text generation, screenwriting, speech transcription, and accessibility tools, ensuring that text restructuring aligns naturally with human speech rhythm. The invention also integrates **real-time text adaptation** for interactive writing environments and AI-based editorial applications.

## Description

### 2. FIELD OF THE INVENTION

**This invention introduces a method for transforming prose in a structured way, based on speech-driven rhythm.** It comprises:
**(a) Extracting vocal cadence features** (like pauses, emphasis, or intonation shifts) to dynamically reshape sentence structures.
**(b) Directly applying these features to modify the structure of the text or prose,** including sentence reconfiguration, paragraph restructuring, pacing shifts, or cinematic emphasis.
**(c) Reconstructing the prose in a way that enhances dramatic immersion, storytelling clarity as well as overall impact** rather than simply formatting text for readability.

Unlike other transcription-based approaches, this invention **does not function as a speech-to-text** tool. Instead it is a **structured prose transformation method, as derived from vocal rhythm, pacing, and speech features,** that actively reshapes written text, based on vocal cues such as speech-driven intensity shifts, pauses, or emphasis.

By taking into account the narrative flow as well as the cinematic impact, **Beat-Sculpting^{™} ensures that sentence and paragraph structures are dynamically reconstructed in a way that goes beyond simple text transcription. In this regard, this system heightens storytelling rhythm, impact, and reader immersion.**

### 3. BACKGROUND OF THE INVENTION (Prior Art Review)

### Existing Speech-to-Text & AI-powered Writing Tools: Limitations

**Traditional speech-to-text systems excel in capturing spoken speech accurately.** However they **do not restructure prose to reflect the expressive, rhythmic, and dramatic qualities that human speech has.** These systems prioritize word fidelity over storytelling structure. The results they offer often **end up in static transcriptions that lack pacing, emphasis, or narrative weight.**

Similarly, modern writing enhancement tools optimize text for clarity and coherence. However, they **do not actively restructure prose for narrative impact. These tools offer predictive text generation, stylistic refinements, or grammatical corrections. But fragmenting, breaking, or reforming sentence structures dynamically based on vocal cues and rhythm is a capability that is beyond them.**

On the other hand, Beat-Sculpting^{™} sculpts text dynamically to mirror human speech cadence, dramatic beats, and narrative pacing, while other modern or advanced writing tools simply write text based on probability-weighted word suggestions.

### Manual Editing - The Industry Bottleneck

If the goal is to improve narrative flow in professional writing, **manual editing remains the industry standard.** Writers, screenwriters, or content creators must manually restructure sentences and adjust the formatting. The pacing as well also has to be fine-tuned manually to achieve optimal readability or immersion.

This process is **time-intensive, highly subjective, and often inaccessible to non-experts.** In order to create an engaging experience, trained professionals are required to **intuitively manipulate sentence weight and structure.** Beat-Sculpting^{™} aims to systematically transform raw, spoken language into immersive, structured prose. In doing so, Beat-Sculpting^{™} aims to remove the guesswork and inefficiency of manual adjustments in the context of professional writing.

### The Critical Gap in Voice-Assisted Storytelling

Some existing voice-assisted storytelling tools do provide text-to-speech narration. However they **lack the ability to restructure text dynamically based on speech rhythm, pacing, or dramatic emphasis.**

Currently, there is no solution that seamlessly converts a spoken text into a prose version that is properly structured or rhythm-aware. There is still a critical gap between traditional speech transcription and a true narrative transformation.

Prior approaches to modern text generation refinement have **focused on grammatical accuracy or dataset optimization.** However, they have not incorporated the natural rhythm and pacing inherent in human speech.

Traditional writing methodologies, on the other hand, rely on manual structuring but lack computational techniques for scalable prose transformation. Beat-Sculpting^{™} uniquely bridges this gap by introducing a structured approach to AI-assisted prose refinement, integrating pacing, rhythm, and voice-driven adjustments in a manner not previously explored in either AI-generated text systems or manual refinement techniques.

Beat-Sculpting^{™} is the first **system designed to address this gap in voice-assisted storytelling. It offers a structured method to transform spoken rhythm into an immersive and narratively impactful written prose.**

### What Beat-Sculpting^{™} Does Differently (With Examples & Counter-Examples)

This is how Beat-Sculpting^{™} dynamically restructures prose based on vocal features. It starts by extracting vocal cues from a text that has been spoken out loud.

### Example (Prose Restructuring - Beat-Sculpting^{™} vs. AI Writing Enhancements):

### Spoken Input:

*"The footsteps echoed. The corridor stretched before him, endless and silent. He inhaled, bracing himself. Then, a noise-a whisper in the dark. "*

**The output from Beat-Sculpting^{™} (Restructured Prose):**
*"The footsteps-slow, deliberate.*
*A breath. Silence.*
*The corridor stretched-longer than it should.*
*Then-*
*The whisper. Close. Too close.*
*A rush of movement-sudden, sharp, unstoppable. "*

**An equivalent suggestion from AI Writing Tools:**
*"His footsteps echoed through the long corridor. He took a breath, steadying himself. Then, a whisper-faint but close. "*

**Unlike other modern writing enhancement tools which aim to improve clarity, Beat-Sculpting^{™} prioritizes impact. Its aim is to restructure text or word compositions and transform the sentences into real prose versions, mirroring human storytelling rhythm.**

The following table highlights how Beat-Sculpting^{™} differs from traditional transcription software and AI-generated writing models:

| Feature | Beat-Sculpting^{™} | Speech-to-Text | AI Writing Tools |
|---|---|---|---|
| Purpose | Transforms prose based on speech as well as restructuring it dynamically | Converts speech into text but with no formatting adjustments | The AI-generated writing is based on probabilistic modeling |
| Method | Vocal cadence, rhythm and dramatic beats are directly mapped to the text structure | A word by word transcription, but with no structural change | Predictive text generation based on probability models |
| Text Output | Structured, rhythm-aware prose that reflects speech pacing and storytelling weight | Flat transcription, unstructured text | AI-generated text that lacks speech and rhythm |
| Adapts Pacing & Rhythm ? | Yes - Punctuation, sentence structure and formatting are adjusted based on speech rhythm | No - Words are captured accurately, but they ignore pacing and rhythm | Partially - AI can mimic speech patterns but lacks real-time adaptation |
| Speech Emphasis Reflected ? | Yes - Captures tones, pauses, and emphasis to enhance dramatic impact | No - No recognition of tone or emphasis | No - Clarity is the focus of the AI, not speech rhythm |
| Predictive AI-Based? | No - Directly restructures text based on vocal cues, but without predictive word systems | No - only based on transcription | Yes - Predictive modeling generates text based on training data |
| Real-Time Adaptation? | Yes - Functions in real-time & post-processing to match spoken rhythm dynamically | No - transcription is static | No - Probability patterns drive the AI-generated text, not live speech |
| Use Case | Writers, editors, screenwriters, interactive storytelling & cinematic writing | Dictation services, court reporting, meeting notes, | Grammar correction, AI- Assisted content creation |

### 4. SUMMARY OF THE INVENTION

At its core, Beat-Sculpting^{™} is a system that uses vocal cues such as speech rhythm, cadence, and dramatic weight to transform prose in a structured way.

Unlike prior methods that either focus on static grammatical correction or manual structuring, Beat-Sculpting^{™} introduces an adaptive system that dynamically adjusts text structuring based on spoken input. This method allows for real-time prose refinement aligned with natural speech cadences, a capability not present in prior AI-generated text systems or traditional manual writing processes.

While other modern text generation methods rely on probability-based word predictions or simply capture spoken content word for word. Beat-Sculpting^{™} instead takes vocal cues then directly maps them onto the spoken text in a structured way, thus **actively optimizing its narrative impact** and **enabling high-impact, cinematic prose adaptation.**

Multiple domains can benefit from this system or methodology, including:
- **Creative Writing & Screenwriting** - Helping authors, screenwriters, or storytellers to craft dynamically structured prose.
- **AI-Enhanced Editing** - Allowing AI-driven speech-assisted platforms to generate rhythm-aware and structured text.
- **Transcription Enhancement** - Upgrading standard speech-to-text methods and incorporating prose formatting that is structurally refined and high-impact.
- **Accessibility & Assistive Technologies** - Adapting spoken rhythm into structured text in order to obtain enhanced readability.

**(For a detailed example of how Beat-Sculpting^{™} restructures text, see Section 3: Background of the Invention.)**

### 5. DETAILED DESCRIPTION OF THE INVENTION

### (A) Input: Capturing Vocal Features

The initial input is a live recording or pre-existing speech audio data that Beat-Sculpting^{™} analyzes. It extracts key vocal features using advanced signal processing techniques, such as:
- **Pauses** → Serve as natural breakpoints in speech cadence, influencing sentence structure, paragraph formatting, and punctuation placement.
- **Emphasis** → Identified through variations in volume, pitch, and energy. Bolding, capitalization, or typographic spacing are mapped onto the sentence based on the detected emphasis.
- **Rhythm Patterns** → Derived from speech pacing, intonation shifts, and sentence flow. Detecting rhythm patterns makes sure that the prose transitions and dynamic restructuring are seamless.
- **Speech Intensity** → Captures loudness variations over time. The speech intensity allows adjustments to the sentence weight, as well as to the paragraph formatting and pacing for dramatic effect.
- **Cadence Shifts** → Tracks acceleration and deceleration in the speech delivery. The shifts in cadence and in the spoken rhythm match each other through sentence fragmentation and length adjustments.
- **Emotional Tone Mapping** → Analyzes the stress in the voice and the tonal inflections. The emotional tone mapping aligns the text formatting and structure with the speaker's mood or energy.
- **Phonetic Stress Tracking** → Detects syllable emphasis and elongation. The phonetic stress that is tracked all along optimizes the formatting for a more natural readability.

### Example Spoken Input:

*"I- I told you. We shouldn't have come here. But now... it's too late. "*

The features extracted here from this sentence are then mapped to corresponding timestamps in (B). The speech dynamics from the speaker's spoken output are preserved through timestamps that form a structured dataset.

### (B) Processing: Mapping Voice Data to Text Adjustments

Once the vocal features are extracted, they are systematically mapped to prose transformation rules, ensuring that the structured output maintains the expressive cadence of speech. The following layers are involved during the whole process:
**1. Pauses** → **Text Break Adjustments**
   **Short pauses** (...) introduce slight hesitations within the flow of the sentences.
   **Medium pauses** (-) restructure the rhythm of the sentence around disruptions or emphasis.
   **Long pauses** (-) heighten the dramatic tension by triggering new paragraph breaks.
**2. Emphasis** → **Text Styling & Sentence Weight**
   **A soft emphasis** (detected via subtle pitch or intensity shifts) is reflected in italics for nuance.
   **A strong emphasis** (higher intensity or prolonged stress) results in bolding, dashes, or line breaks to increase weight.
**3. Rhythm** → **Sentence Flow Adjustments**
   **A fast-paced speech** leads to urgency, reflected through the use of short, clipped sentences.
   **A slower speech** cadence expands details, and stretches prose for immersive pacing.
   **Rhythmic beats** dictate where the sentences fragment or elongate.
**4. Overlapping Features** → **Combined Effects**
   **Pause + Emphasis:** A heavier weight and beat is generated-"The silence... was deafening." → "The silence-was deafening."
   **Fast Rhythm** + **Strong Emphasis:** Creates a snapped, high-impact delivery-"Run! Now!"
   **Slow Rhythm** + **Long Pause:** Cinematic weight expansion through text-"And then... everything changed."

### Example Spoken Input:

*"I- I told you. We shouldn't have come here. But now... it's too late."*
- **Extracted Features:**
   - "I- I" → **Detecting stammer** (through short pause + emphasis).
   - "We shouldn't have come here." → **Regular pacing.**
   - "But now..." → **Medium pause** (hesitation).
   - "It's too late." → **Strong emphasis** + cadence drop.

### (C) Output: AI-Enhanced Prose Structuring

Final output of Beat-Sculpting^{™} : **a dynamically structured text in prose format where the rhythm of the speaker is mirrored through cadence, rhythm, and dramatic emphasis.** Unlike transcription-based systems or AI-generated writing tools, Beat-Sculpting^{™} works beyond simple text refinement-it **rebuilds sentence structures, fragments, and narrative flow in order to align with storytelling rhythms.**

**Here is a step-by-step restructuring process for the transformation:**
**1. Sentence formatting & Fragmentation**
   - Breaks long speech into shorter, high-impact beats.
   - Emphasis is taken into account through the inserts of pauses, dashes, line breaks, weighted punctuation.
**2. Dramatic Rhythm Mapping**
   - Adjusts the pacing of the sentence based on vocal intensity and hesitation.
   - The use of elongated spacing, weighted pauses, and paragraph shifts creates tension.
**3. Cinematic Line Structuring**
   - Principles of cinematic storytelling dictate the alignment of dialogues and beats in the text.
   - The use of silences and abrupt line shifts mirrors suspense, urgency, or slow-burn tension.
**4. Narrative Weighting**
   - Key phrases are expanded, cut, or rearranged based on how the speaker delivers them.
   - Rhythm-dense moments (e.g., whispered phrases or stammered speech) are reinforced with fragmented beats.

### Example: Final Transformation

**Spoken Input (From A & B):**
*"I- I told you. We shouldn't have come here. But now... it's too late."*

**Beat-Sculpting^{™} Processing:**
- **Pauses detected** → Pacing is restructured.
- **Emphasis mapped** → Weighted dashes & line breaks added.
- **Dramatic beats identified** → Cinematic tension is heightened through fragmentation.

**Final Output (Beat-Sculpting^{™} Prose Transformation):**
*"I- I told you. "*
*"We shouldn't have come here. "*
*Her voice was weak. A murmur in the dark, a candle dying in the night.*
*"But now-"*
*A beat.*
*A breath.*
*A thought too difficult to ignore-*
*"It's too late. "*

**This restructuring captures hesitation, pacing, and dramatic impact. The recorded speech is transformed, the result is an immersive, structured narrative.**

### (D) Case Example

This section illustrates how Beat-Sculpting^{™} restructures prose dynamically.

In this section, we compare standard AI-generated writing tools and speech-to-text to **Beat-Sculpting^{™}** 's process.

### Spoken Input (Unprocessed Speech):

*"He-he walked into the room, and, uh... it was just... too dark to see anything. "* (Hesitant, broken speech with pauses and fillers)

### 1. Output from Existing Methods (Fails to Preserve Narrative Impact)

**Speech-to-Text Output:**
Captures words accurately, but fails to structure for impact.
Dramatic beats, hesitation and pacing are not taken into account.

**Raw AI Transcription:**
*"He he walked into the room and uh it was just too dark to see anything. "*

**AI-powered Writing Tools:**
Improves clarity, but flattens the narrative pacing as well as the tension.
Emotional weight and expressive hesitation are removed from the spoken input.

**AI-Enhanced Rewrite:**
*"He entered the dark room, barely able to see. "*
(Problem: Lacks the speaker's hesitation, speech rhythm, and uncertainty.)

### 2. Beat-Sculpting^{™} Output (Structured Prose Transformation)

**Final Output (Beat-Sculpting^{™} Transformation):**
*"He stepped into the room-"*
*"Darkness pressed in, swallowing every outline. "*
*"No way out. No way forward."*
*"Just-too dark. "*

**Key Improvements:**
- **Reconstructs the rhythm and weight of hesitation.**
- **Breaks text into dramatic beats, mirroring speech cadence.**
- **Fragmented spacing makes sure suspense is enhanced.**

### 3. Why This Matters

Despite advancements in neural text models, existing AI-generated prose or modern text-generation methods still exhibit rigid structuring, inconsistent pacing, and a lack of dynamic speech flow. This is a direct result of the fact that prior methodologies have optimized for lexical correctness but have not accounted for real-time narrative structuring based on human speech dynamics.

Unlike AI-generated text, which focuses on readability rather than structure, capturing words but disregard pacing, **Beat-Sculpting^{™}** instead prioritizes immersive and structured storytelling as its core focus.

### Final Takeaway:

**Beat-Sculpting^{™} functions not as a mere formatting tool but as a narrative transformation engine, sculpting speech-driven text into cinematic, structured prose.**

### 7. AI SCALING CONSIDERATIONS

AI-driven writing tools, voice assistants, and language models (LLMs) continue to evolve as artificial intelligence keeps improving. In doing so, they become increasingly more capable of modifying text structures based on learned speech rhythms, segmented pacing, and narrative weighting.

In order to prevent workarounds based on AI, in this section, legal, functional, and technological protections embedded in this patent are outlined. This section ensures that no AI-generated adaptation bypasses its coverage through indirect means.

### 7.1 AI Assistant & Voice-Controlled AI Restrictions

### Risk:

AI voice assistants are now integrating structured speech-to-text formatting.

### Patent Coverage

This patent explicitly applies in any case where text is dynamically restructured by an AI system and the restructuring itself being based on:
- Extracted speech cadence or extracted rhythmic weighting.
- Speech-driven formatting (e.g., inserting pauses, line breaks, or dramatic restructuring).
- Text formatting that mirrors spoken rhythm, whether in real-time or post-processing.

**Protection Against AI Assistants Claiming "UX Optimization"**

No AI system can claim exemption by framing prose transformation as a "readability enhancement" or "speech-to-text UI optimization."

Any assistant that modifies formatting, pacing or prose structure dynamically based on voice input falls under this patent's protection.

### 7.2 AI Ghostwriting & LLM Structuring Loophole

### Risk:

Large Language Models (LLMs) can be trained on structured text that aligns with Beat-Sculpting^{™} principles without directly implementing the method.

These AI tools may use dataset training in order to indirectly replicate structured prose transformation. They could argue that the formatting of structured prose has been "learned" by their model rather than being implemented through a protected method.

### Reinforced Protection Against AI-Generated Mimicry

Any AI-generated output that replicates Beat-Sculpting^{™} methodologies in formatting, pacing, or rhythm-based text formatting constitutes infringement.

If explicit licensing hasn't been granted, no AI model is permitted to train on structured prose datasets that embeds formatting principles derived from Beat-Sculpting^{™}.

**Preemptive Ban:** AI developers cannot claim exemption by training models on human-written prose that already applies Beat-Sculpting^{™}-like formatting.

### 7.3 Multi-Step AI Workaround Prevention

### Risk:

AI companies may attempt to break the Beat-Sculpting^{™} transformation process into separate AI subsystems in order to attempt bypassing licensing.

**Example:**
- AI Model A is in charge of extracting speech data markers such as cadence and rhythm.
- AI Model B restructures sentences and adjusts pacing.
- AI Model C applies narrative weighting & emphasis.
- **Each system alone does not infringe, but when combined, they fully replicate Beat-Sculpting^{™}.**

**Protection Against Multi-AI Model Workarounds**

Under this patent, multiple processing layers achieving AI-based text transformation and structured prose output are treated the same as a single unified system.

AI companies cannot claim exemption by fragmenting their process into distinct AI tools if the combined effect mirrors Beat-Sculpting^{™}.

### 7.4 AI Scaling Legal Protections - Feature Table

| **Feature** | **Beat-Sculpting^{™}** | **LLMs** | **Speech-to-Text AI** |
|---|---|---|---|
| **Core Functionality** | **Prose is restructured** using the mapping of a spoken output | Predicts structured text using probabilistic modeling | Converts speech to text without structural adaptation |
| **Text Output** | Dynamic, structured storytelling prose with adaptive beats | Clarity as the focus, flat, AI-suggested phrasing | Raw transcription with no pacing recognition |
| **Speech Influence** | Direct, measurable speech-driven restructuring | Statistical prediction of "speech-like" output | Word accuracy as the focus, not rhythm-adaptive |
| **Real-Time Processing** | Yes - adapts instantly or in post-processing | No - previous dataset training dictates the predictions | No - transcribes speech but does not restructure prose |
| **Cinematic Formatting** | Yes - applies structured breaks, pacing, and rhythm-based formatting | No - flat AI-generated sentence refinement | No - text, plain, is outputted |
| **Interactive Adaptation** | Yes - prose adapts dynamically to narrative weight | No - no feature for real time restructuring of text based on speech | No - simple voice-to-text mapping |

### 7.5 Future-Proofing Against AI Expansion

To ensure Beat-Sculpting^{™} remains safeguarded against future AI advancements, this method applies to:
- Any AI-generated speech-to-text formatting enhancement, whether real-time or dataset-trained.
- LLM-based writing tools that attempt to integrate structured prose transformation.
- Any case where spoken rhythm is used to modify text by Voice-controlled AI assistants.
- Multi-AI systems that segment processing steps, in order to bypass direct licensing.
- Any AI-driven narrative structuring system that modifies prose formatting through rhythm-based analysis.

**Final Protection Clause:**
No AI-generated or AI-assisted prose transformation system-whether direct, indirect, multi-step, or dataset-trained-may claim exemption from licensing under this patent if its output mirrors the speech-driven text transformation principles of Beat-Sculpting^{™} structurally.

### 8. POTENTIAL COMMERCIAL APPLICATIONS

The speech-driven structure prose transformation offered by Beat-Sculpting^{™} is a method that has broad applications across several industries.

### 8.1 Core Use Cases (Creative & Media Applications)

### 1. AI-Powered Prose Restructuring for Writers & Editors

**Beat-Sculpting^{™}** enables authors, screenwriters, journalists, and content creators to transform dictated or transcribed speech into structured, dynamic prose.
- Enhances storytelling impact by restructuring text to match human speech rhythm.
- Improves pacing by automatically synchronizing the speaker's spoken rhythm's with the narrative beats.

### 2. Screenwriting, Playwriting & Dialogue Refinement

- Formats dialogue scripts in order to reflect the natural cadence as well as the character pacing.
- The extracted tension points as well as line breaks improve the line delivery for playwrights and voice actors.
- Integrates into AI-powered scriptwriting tools, such as Hollywood screenwriting software and video game dialogue engines.

### 3. Audiobook & Podcast Scripting Optimization

- Adjusts written scripts in order to align with the narrator's own delivery style.
- Refines pacing adjustments for suspense, comedy, or dramatic storytelling.
- AI-generated audiobooks are optimized with realistic emphasis and rhythm during narration.

### 4. Interactive Fiction & AI-Driven Storytelling

- Enables game developers as well as interactive fiction creators to restructure dialogue dynamically.
- Adapts in-game text based on real-time voice input, ensuring immersive narration.
- Characters' dialogues now have a structured rhythm, allowing them to "speak" with rhythm, which in turn supports AI-generated and adaptive storytelling.

### 8.2 Enterprise & Industry Use Cases

### 5. AI Speech Synthesis & Virtual Assistants

- Natural delivery in AI-generated speech obtained through restructuring answers.
- Applies to AI-driven voice assistants.
- Human-like delivery, instead of robotic. The dialogue maintains a structured and rhythmic pacing even if generated by AI.

### 6. Legal & Professional Transcription (Courtrooms, Business, Medical)

- Transcripts and other speech-based documentation are restructured, clarity and readability both being the focus.
- Reduces manual editing time for court reporters, journalists, as well as medical transcriptionists.
- Spoken reports as well as AI-driven meeting summaries are automatically formatted.

### 7. Accessibility & Neurodivergent Communication Tools

- Adapts speech-to-text for neurodivergent individuals (e.g., ADHD, autism, speech impairments).
- Comprehension is enhanced, with spoken language being restructured and re-organized into digestible text.
- Supports assistive technology tools for hearing-impaired as well as visually impaired users.

### 8.3 Future-Proofing for AI & Emerging Tech

### 8. AI Speech Structuring & Voice-Driven Editing

- Applies to AI-generated text-to-speech (TTS) systems.
- Ensures AI-driven screenplay writing, voice-based script formatting, and audiobook pacing remain covered under the patent.
- Ensures that any AI speech-synthesis tool applying structured text formatting remains covered under the patent as well.

### 9. Multilingual & Cross-Cultural Adaptation

- Different languages have different rhythms, but each specific rhythm is now integrated back into the restructured sentences.
- Applies to movie scripts requiring translation, industries requiring voice dubbing as well as international audiobook narration.
- Ensures speech-based text formatting remains consistent across languages.

### 10. AI-Powered Real-Time Text Editing (Speech-Controlled Writing Tools)

- Allows for voice-activated text restructuring.
- Automated, hands-free text formatting accessible to content creators
- Enables voice-based manuscript revisions in professional writing software.

### 9. LICENSING & USAGE RESTRICTIONS

To protect the proprietary nature of Beat-Sculpting^{™}, this section outlines explicit licensing requirements, prohibited AI workarounds, and enforcement policies for unauthorized use.

### 9.1 Prohibition of Internal or Closed-Source Use Without Licensing

### Who's Restricted?

Without explicit licensing, even in closed-source environments, AI labs, research entities, private companies or independent developers are not permitted to integrate, replicate, or modify Beat-Sculpting^{™}.

Applies to:
- Companies deploying AI-based technology solutions.
- Enterprise solutions using Al-enhanced prose transformation.
- Research institutions developing AI-powered narrative structuring.

### What's Prohibited?

- The training of AI models using principles of **Beat-Sculpting^{™}**
- R&D projects attempting to replicate Beat-Sculpting^{™} for private tools.
- Unlicensed use in enterprise solutions. It includes AI-powered editing suites.

### Protection Against Shadow AI Research & Proprietary Model Training

Companies cannot claim research exemptions to train AI models on Beat-Sculpting^{™} principles. Closed-source implementations are considered unauthorized derivative use.

### 9.2 Restrictions on AI Training & Model Integration

### Explicit AI Dataset Ban

Without explicit authorization, no AI model (LLMs, speech-to-text AI, generative text tools) is permitted to train on datasets that contain structured prose that mirrors Beat-Sculpting^{™} principles.

**This includes:**
- Direct dataset integration (using Beat-Sculpting^{™}-formatted text as training data).
- Extracted dataset learning (AI models that have been trained on human-written prose that replicates the Beat-Sculpting^{™} formatting).

### Reinforced AI Training Ban - Preventing "Inspired" Model Learning

AI developers cannot bypass patent protection by training AI models on manually structured text that uses Beat-Sculpting^{™} principles

Any dataset containing rhythm-driven prose formatting must be licensed before AI training.

### Preemptive Ban on Reverse Engineering

AI models cannot be designed to derive Beat-Sculpting^{™} transformations through dataset pattern recognition.

This applies to:
- Deep-learning networks.
- Pattern-matching AI.
- Generative text systems trained to replicate segmented, rhythm-driven prose.

### Blocking AI Workarounds - Licensing Required for Any AI-Generated Mimicry

If the formatting of a text that has been generated by AI resembles **Beat-Sculpting^{™}** formatting, it constitutes infringement even in the case that the model was trained indirectly.

### 9.3 Fair Use & Open-Source Limitations

### No Open-Source Derivatives Allowed

**Beat-Sculpting^{™}** is not eligible for open-source distribution. No modifications, forks, or derivatives may be developed under open-source licensing.

**Applies to:**
- The attempt by AI companies to release structuring tools under an open-source label "inspired by Beat-Sculpting^{™}".
- Research institutions that publish modified versions of structured prose transformation.
- AI labs working in open-source environments, developing or implementing Beat-Sculpting^{™} methodologies, even partially.

### Preventing Open-Source Exploits - No Partial Adaptations

Any partial adaptation of Beat-Sculpting^{™} principles remains protected under this patent.

Slight modifications (e.g., changing formatting rules, adjusting transformation patterns) do not exempt AI tools from licensing.

### 9.4 Licensing Models & Commercial Deployment

### Mandatory Licensing for AI Integration

Formal licensing is required for any AI system that applies **Beat-Sculpting^{™}** methodologies or principles.

**Licensing applies to:**
- AI-powered writing assistants (LLMs, ChatGPT-like text generators).
- Speech-to-text enhancement tools.
- Film, game, and audiobook structuring tools (Hollywood, game studios, TTS software).
- Any AI-powered tool that transforms or restructures text using formatting based on speech.

### Enforced API Licensing for AI Implementation

The use of an official API or licensed SDK is mandatory for any company in order to integrate Beat-Sculpting^{™} into their own AI-driven text transformation systems.

### 9.5 Violation & Enforcement

### Strict Legal Action Against AI Infringement

Unauthorized use, AI model training, or dataset integration of Beat-Sculpting^{™} constitutes patent infringement.

**Applies to:**
- Tools using AI to replicate formatting techniques resembling Beat-Sculpting^{™} 's methodologies
- LLMs trained on structured prose datasets mimicking Beat-Sculpting^{™} principles.
- Open-source workarounds attempting to bypass licensing.

### Enforcement Mechanisms

AI companies seeking to circumvent licensing will be held accountable under patent law.

**Penalties for Patent Infringement:**
- Cease-and-desist orders.
- Financial penalties for unauthorized use.
- Licensing bans, preventing future AI integration.

### 10. Large-Scale Licensing Bypass

### 10.1 Prohibition of Third-Party Development Workarounds

### Risk:

In order to bypass direct licensing, AI companies may attempt:
- Outsourcing Beat-Sculpting^{™}-like technology to third-party development firms.
- Building AI-powered tools replicating Beat-Sculpting^{™} principles using a different corporate name.
- Licensing AI-driven prose restructuring models to separate companies, which then claim independent ownership.

### Protection Against AI Licensing Shell Games

Any AI-driven prose transformation tool indirectly supported, funded or developed by an entity that would otherwise require a license remains bound by this patent.

Exemption cannot be claimed by AI companies using licensing deals and structuring them around subsidiary firms, AI labs or outsourced R&D teams.

Any corporate structure designed to bypass direct licensing (including offloading development to smaller startups or research groups) constitutes infringement.

**Explicit Coverage:**
- Enterprise AI partnerships - If an AI company funds or supports a startup developing Beat-Sculpting^{™}-like text transformation, it remains bound under this patent.
- Shell corporations & front companies - AI firms cannot create "independent" subsidiaries to develop this technology under a different corporate entity.
- Third-party vendors & outsourcing deals - Any AI lab hired to develop structured prose transformation tools for a larger company must comply with Beat-Sculpting^{™} licensing.

### Multi-Step AI Workarounds Are Also Blocked

Dividing the Beat-Sculpting^{™} process and methodologies across multiple teams in order to claim no single entity is infringing is still considered infringement.

Even if separate R&D divisions handle different parts of structured prose transformation, the entire pipeline remains bound by this patent.

### 10.2 No Licensing Transfers to Avoid Direct Liability

AI corporations may attempt to license a Beat-Sculpting^{™}-like system to smaller partners, then deny direct responsibility for its use.

### Licensing Restriction Clause

- Exemption cannot be claimed by licensing a Beat-Sculpting^{™}-like formatting system to smaller vendors or partners.
- If a licensed partner develops AI-generated text structuring based on Beat-Sculpting^{™}, the original licensor remains liable for patent infringement.
- "Independent Development" is NOT a legal defense. It must be licensed if structured prose technology mirrors Beat-Sculpting^{™}.

**Explicit Coverage:**
- The deployment of AI-based prose structuring tools via third-party teams by Streaming & media partnerships is not permitted.
- Publishing platforms incorporating AI-assisted or **AI-Generated** content cannot integrate Beat-Sculpting^{™}-like transformations through external development contracts.
- As long as the output mirrors Beat-Sculpting^{™}, independent research cannot be claimed by Universities and AI research groups funded by major tech firms.

### Closing the "We Just Licensed It" Excuse

AI firms cannot claim they "didn't build the system" if they:
- Influenced, funded or contracted its development.
- Integrated it into their ecosystem.
- Deployed it under a different name.

### 10.3 AI API & Cloud Service Restrictions

Instead of integrating Beat-Sculpting^{™} directly, AI firms may implement cloud-based prose structuring APIs stating them as simply "general AI services".

### API Licensing Requirement

- Any cloud-based API, AI-powered editing tool, or SaaS platform implementing structured prose transformation must be directly licensed under this patent.
- No AI company may provide structured prose transformation as a service without explicit Beat-Sculpting^{™} licensing.
- As long as text has been structured by a cloud AI model using principles resembling Beat-Sculpting^{™}, it remains bound under this patent, even if not marketed as Beat-Sculpting^{™}.

**Explicit Coverage:**
- SaaS & Cloud AI Services -Without licensing, no AI-driven text generation, refinement, or structuring technologies can offer structured prose transformation based on vocal cues or features.
- AI-Powered Editing Software - Any editing tool that automatically restructures text based on extracted rhythmic pacing must comply with Beat-Sculpting^{™} licensing.
- Third-Party API Integrations - exemption cannot be claimed through API partnerships with external firms, in the case of AI companies offering Beat-Sculpting^{™}-like transformations.

### Closing Cloud AI Loopholes

Any structured prose transformation based on extracted voice features, and performed by an AI API is bound by this patent, regardless of whether it is an internal or external service.

Before text structuring features can be integrated, the AI cloud providers must obtain explicit licensing.

### 10.4 Enforcement & Legal Consequences

### Immediate Legal Accountability

Any AI company attempting to outsource, license, or proxy-develop structured prose transformation is directly liable under patent infringement law.

Parent companies remain legally responsible for their subsidiary research that mimics Beat-Sculpting^{™}.

Financial penalties, cease-and-desist orders, and licensing bans apply to any entity attempting third-party circumvention.

### Future-Proofing Against Evolving AI Models

This patent applies to all structured prose transformation tools, including current & future AI implementations.

No company can claim exemption due to changes in AI model architecture-as long as the result mirrors Beat-Sculpting^{™}, it remains protected.

Beat-Sculpting^{™} licensing must be renewed for any AI model updates that continue applying structured text transformations.

### 11. AI Speech & LLM "Ghostwriting"

### 11.1 Defining AI Ghostwriting as Patent Infringement

### Risk:

AI-powered text generation models, including but not limited to large language models (LLMs), may:
- Learn structured prose formatting from existing datasets that contain Beat-Sculpting^{™}-like text.
- Extract narrative structuring principles from prior examples without directly implementing the method.
- Generate prose mirroring **Beat-Sculpting^{™}** formatting and pacing while claiming it was produced independently.

### Protection Against AI Ghostwriting Loopholes

AI-generated text that mimics Beat-Sculpting^{™}-style rhythmic weighting, formatting, or prose restructuring constitutes patent infringement.

AI models cannot claim exemption by arguing that the structured prose formatting emerged organically from dataset training.

Any AI-generated text following Beat-Sculpting^{™}-like patterns-whether learned, derived, extracted, or manually adjusted-is subject to licensing.

**Explicit Coverage:**
- AI-generated prose that follows speech-driven text formatting.
- AI-assisted writing tools restructuring, transforming, or formatting text to mirror Beat-Sculpting^{™}.
- LLM models trained on structured text datasets, even if the transformation method itself is not directly implemented.

### AI Model Training Alone Can Constitute Infringement

If an AI model produces structured prose in line with Beat-Sculpting^{™} methodologies, the company must prove that it was not trained on any dataset containing such formatting.

AI companies are responsible for ensuring their model outputs do not replicate patented structured prose transformations.

### 11.2 AI Dataset Training Restrictions

### Risk:

AI models do not always implement transformation methods directly. Instead, they:
- Train on structured datasets that already follow Beat-Sculpting^{™} principles.
- Extract text formatting & rhythm-based structuring from human-written examples.
- Reproduce structured prose transformation without technically "applying" Beat-Sculpting^{™} algorithms.

### Dataset Licensing Restriction

AI companies must obtain explicit licensing before training any model on structured prose containing rhythm-based formatting.

Prior approval is mandatory for any AI dataset to include text structured with Beat-Sculpting^{™} principles.

Exemption cannot be claimed by AI developers arguing that their AI model learned passively structuring principles through exposure to dataset.

**Explicit Coverage:**
- LLMs & generative AI models trained on structured datasets.
- AI-powered text editors integrating learned pacing & formatting.
- Machine-learning models using Beat-Sculpting^{™}-like prose formatting as part of their training process.

### AI Developers Cannot Claim "Unsupervised Learning" as a Defense

AI companies are responsible for dataset screening-if their model generates structured text that mimics Beat-Sculpting^{™}, they are accountable.

No exemption is granted for models that "accidentally" produce structured prose transformation.

### 11.3 AI Post-Processing & Hybrid Model Adaptation

### Risk:

AI text structuring tools may attempt to claim that:
- The AI did not generate structured prose but merely "refined" it.
- The text was originally user-written and only post-processed by AI.
- Their system only suggests restructuring rather than directly implementing it.

### Hybrid AI-powered Writing Tools Are Also Bound by This Patent

Any AI-based prose refinement tool that suggests, restructures, or modifies text formatting based on speech rhythm, cadence, or pacing that have been derived or extracted falls under this patent.

AI post-processing is not exempt-if a model transforms or restructures text to match Beat-Sculpting^{™} formatting, it must be licensed.

Even if an AI system "suggests" structured prose transformation in a Beat-Sculpting^{™}-like way but does not automatically apply it, it remains covered by this patent.

**Explicit Coverage:**
- AI writing assistants that refine structured prose.
- AI Editing tools that suggest formatting based on derived or extracted rhythm.
- Post-processing AI techniques that adjust formatting, mirroring Beat-Sculpting^{™} 's principles.

### AI Cannot Avoid Licensing by Claiming "Assisted Formatting"

If AI is involved in structured text modification-whether via direct generation, refinement, or suggestion-it must comply with **Beat-Sculpting^{™}** licensing.

### 11.4 AI Training Transparency Requirements

### Risk:

AI companies might attempt to claim:
- That they do not know how their model generates structured prose.
- That their dataset is private, making verification impossible.
- That their model operates as a "black-box" system and is exempt from direct scrutiny.

### AI Developers Must Prove Compliance

Any AI system generating structured prose must disclose its dataset sources upon patent inquiry.

AI companies must prove that their models were not trained on Beat-Sculpting^{™}-formatted text if infringement concerns arise.

Failure to disclose dataset sources constitutes automatic non-compliance with this patent.

**Explicit Coverage:**
- Closed-source AI models must provide dataset proof upon legal request.
- Failure to prove training compliance is treated as an admission of infringement.
- All structured prose that has been AI-generated remains subject to **Beat-Sculpting^{™}** patent protections.

### AI Companies Are Responsible for Their Model's Output

If Al-generated text mirrors **Beat-Sculpting^{™}** formatting, the company must provide dataset evidence that it was not trained on structured prose formatting.

Lack of evidence results in presumed infringement.

### 12. Open-Source Loophole & Partial Adaptation

### 12.1 Blocking Open-Source Releases of Beat-Sculpting^{™}

### Risk:

AI companies, open-source developers, and research institutions may attempt to:
- Release an "open-source" variation of structured prose transformation under a different name.
- Modify elements of Beat-Sculpting^{™} while retaining its core functionality to claim it as a "separate innovation."
- Distribute AI tools that perform Beat-Sculpting^{™}-like transformations, but avoid direct licensing by publishing their work under public domain or open-source licenses.

### Protection Against Open-Source Exploits

No open-source adaptation, partial implementation, or variant of Beat-Sculpting^{™} methodologies is exempt from licensing requirements.

Any structured prose transformation system that uses speech-driven pacing, narrative formatting, or rhythmic weighting remains protected under this patent.

No entity may create an "inspired" open-source derivation that functionally replicates Beat-Sculpting^{™} principles under an alternative terminology.

**Explicit Coverage:**
- AI labs, research groups, and developers releasing open-source prose transformation models that resemble Beat-Sculpting^{™}.
- Non-commercial projects attempting to bypass licensing by distributing Beat-Sculpting^{™}-like systems as "free software."
- "Creative Commons" or "Public Domain" works that apply structured prose transformation techniques similar to Beat-Sculpting^{™}.

### No Workaround via "Minor Modifications"

Slight modifications (e.g., changing formatting rules, adjusting formatting behaviors, or renaming core techniques) do not exempt open-source tools from this patent.

If the output follows Beat-Sculpting^{™} transformation principles, the tool remains subject to licensing.

### 12.2 Fair Use & Public Domain Limitations

### Risk:

Academic institutions, researchers, or independent developers may attempt to:
- Publish Beat-Sculpting^{™}-like structuring methods as part of research papers, claiming fair use.
- Release portions of the methodology in textbooks or technical documents as "public knowledge."
- Create non-commercial demo versions of Beat-Sculpting^{™} for research purposes.

### Restriction on Fair Use & Public Domain Releases

Any academic, research, or education publication remains subject to licensing if it outlines a method for structured prose transformation using structuring principles similar to Beat-Sculpting^{™} such as, but not limited to:
- rhythm-base formatting.
- speech-driven pacing.
- narrative weighting.

Publicly documenting or distributing Beat-Sculpting^{™}-like methodologies under fair use exemptions is not permitted.

Public-domain knowledge does not exempt structured prose transformation tools from the protection of this patent.

**Explicit Coverage:**
- Published research papers outlining speech-driven text restructuring techniques that are similar to Beat-Sculpting^{™}.
- Academic studies on rhythmic text formatting & weighted prose formatting that are similar to Beat-Sculpting^{™}.
- Educational courses, online tutorials, and technical whitepapers documenting structured prose transformation methods that are similar to Beat-Sculpting^{™}.

### Research & Documentation Alone Can Be an Infringement

Publishing the methodology itself-regardless of implementation-may still constitute infringement if it enables others to recreate Beat-Sculpting^{™}.

Without proper licensing, no entity is allowed to publicly document structure prose transformation techniques.

### 12.3 Blocking Open-Source AI Models

### Risk:

AI research labs and independent developers may attempt to:
- Train an AI model on structured prose datasets, and release it under an open-source license.
- Publish AI-powered prose transformation tools while claiming they are unrelated to Beat-Sculpting^{™}.
- Offer free AI-based text formatting tools that functionally replicate Beat-Sculpting^{™} without licensing.

### Open-Source AI Model Restriction

Any AI model that learns, extracts, derives or applies structured prose transformation principles remains covered under this patent.

Open-source AI projects cannot claim exemption by making minor modifications to Beat-Sculpting^{™} formatting methods.

No AI-powered open-source project may restructure text using speech-driven cadence, extracted rhythm, or weighted prose formatting without explicit licensing.

**Explicit Coverage:**
- Open-source AI tools that apply structured text formatting.
- AI-powered creative writing assistants released as free software.
- Academic AI projects that train on structured prose datasets.

### No Open-Source Exemptions for AI-Based Writing Tools

If an AI tool produces structured text using Beat-Sculpting^{™} methodologies, it must be licensed-regardless of whether it is a commercial or non-commercial release.

### 12.4 Enforcement & Legal Consequences

### Immediate Legal Accountability

Any organization, developer, or AI lab that attempts to release an open-source, public-domain, or free variant of structured prose transformation will be held accountable under patent law.

This patent cannot be overriden by :
- fair use exemption.
- public-domain justification
- educational exception.

Financial penalties, licensing enforcement, and cease-and-desist orders apply to any entity attempting open-source circumvention.

### AI Developers Cannot Release Open Variations to "Share with the Community"

If an AI model is trained on structured prose transformation and is released publicly, the developers remain legally accountable for patent infringement.

Open-source licensing does not grant immunity from Beat-Sculpting^{™} protections.

**Explicit Coverage:**
- Free software that functionally resembles Beat-Sculpting^{™} and distributed by independent developers.
- AI companies publishing an "open-source experiment" that functionally mirrors Beat-Sculpting^{™}.
- Academic researchers releasing code, datasets or AI models where structured prose transformation resembling Beat-Sculpting^{™} has been applied.

### Open-Source Releases Do Not Override Licensing Requirements

No open-source license, including but not limited to MIT, GPL, Apache, and Creative Commons, may be used to distribute Beat-Sculpting^{™}-like text structuring methodologies without explicit licensing.

## Claims

1. **Main Claim (Broadest Protection)**
A method, system, or framework for dynamic prose transformation, wherein the structured text is formatted based on spoken cues such as extracted speech cadence, rhythm, and dramatic weighting, comprising:
(A) **Capturing Vocal Input & Extracting Expressive Speech Features**
- The detection of pauses, emphasis, tonal shifts, phonetic stress, and pacing variations. These cues establish the narrative rhythm.
- Formatting markers are identified through the extraction of these speech-based cues. These markers indicate structural changes in the prose.
**(B) Direct Prose Restructuring Based on Speech Cues**
- Fragmenting, expanding, or reordering the sentences in response to the speech rhythm that has been detected and captured.
- Applying cinematic structuring, including sentence weight adjustments as well as dramatic paragraph formatting.
- The spoken rhythm and the structured text are then aligned.
**(C) Outputting Structured, Speech-Synchronized Prose**
- Generating the structured, rhythm-aware text. The generated text mirrors the expressive cadence of the speaker.
- Applying the structured prose transformation equally to:
- Live speech input (spoken narration, real-time dictation).
- Pre-recorded speech processing (podcasts, interviews, voiceover scripts).
- AI-assisted adaptation of previously generated content related to speech.

2. **Cinematic Formatting & Emphasis Controls**
The method of Claim 1, wherein the emphasis that has been first extracted from the spoken output, is then applied through the text formatting for cinematic effect. It includes :
- Formatting of the text, now driven by beat information (dynamic line breaks, scripted pacing).
- Typographic enhancements (weighted pauses, dashes, ellipses, spacing shifts).
- Adaptive paragraph structuring. The structuring prioritizes dramatic tension, suspense pacing, and visualized storytelling beats.

3. **AI & Human-Driven Refinement for Narrative Structuring**
The method of Claim 1, wherein AI and human influences both refine the prose dynamically based on:
- AI-based adjustments derived from the interactions with the speaker's speech patterns.
- Real-time, actor-driven pacing in dialogue structuring for scripted performances.
- Custom narrative mode selection (cinematic, suspense, dramatic, fragmented).

4. **Deployment & Platform Integration (Cloud, On-Device, Embedded AI)** The method of Claim 1, wherein the deployment of the system is done via:
- Cloud-based processing, in order to allow for real-time, structured prose transformation.
- Local execution on video editing platforms, screenwriting tools or creative softwares.
- Integrated into AI hardware for speech-driven adjustments inside voice-controlled applications.

5. **AI Assistant & Virtual Speech-To-Text Processing**
The method of Claim 1, wherein AI-driven voice assistants, as well as speech-to-text systems both apply Beat-Sculpting^{™} transformation via:
- Voice-responsive intelligent systems for text generation and structuring.
- Hybrid AI-human text refinement models that use real-time spoken data to predict as well as structure text.
- Automated speech-to-text tools that format transcription based on extracted or derived rhythm, formatting, and pacing.
**Protection Against AI-Assistant Loopholes:**
Any AI system taking derived or extracted rhythm, expressive weighting or spoken cadence into account in order to restructure prose, whether it is marketed as an AI enhancement or an accessibility feature, falls under this patent.

6. **AI Ghostwriting & Structured Text Mimicry**
The method of Claim 1, wherein an AI-generated text mimicking Beat-Sculpting^{™} falls under infringement protection. It includes:
- AI models replicating speech-driven structures for their prose through their training, even if indirect.
- Text generation systems that restructure or format their output based on learned speech cadence.
- Machine learning models that predict, analyze or extract Beat-Sculpting^{™} formatting without explicit use of the system.
**Protection Against AI-Generated Ghostwriting:**
Even if Beat-Sculpting^{™}'s techniques or methods are not directly used by the model, AI-generated text that aligns structurally with Beat-Sculpting^{™} qualifies as infringement.

7. **Large-Scale Licensing Bypass Protection**
The method of Claim 1, wherein commercial licensing restrictions extend in order to prevent indirect implementation via:
- Third-party AI-model integration, without explicit licensing.
- Companies outsourcing text restructuring to external AI labs or open-source tools.
- The application of **Beat-Sculpting^{™}** transformations via multi-step pipelines by AI models trying to bypass direct licensing.
**Protection Against AI Corporations Offloading Responsibility:**
Even if a commercial AI model does not internally implement Beat-Sculpting^{™}, any third-party AI service that integrates its structured prose transformation must still comply with this patent's licensing.

8. **Open-Source Loophole & Partial Adaptation Prevention**
The method of Claim 1, wherein structured prose transformation principles cannot be:
- Published under an alternative terminology, stating it as open-source processes or methodologies.
- Modified or distributed in a way that retains **Beat-Sculpting^{™}** core functions, but under an altered name.
- Fragmented into smaller AI models in order to bypass the restrictions of implementing them as a whole-system.
**Protection Against Open-Source Workarounds:**
Any open-source adaptation, implementation-even partial, or academic paper publishing techniques about structural prose transformation remain subject to licensing under this patent.
